# EUROPEAN PATENT SPECIFICATION

(11) **EP 3 471 337 B1**
(45) Date of publication and mention of the grant of the patent: **22.09.2021**
(21) Application number: 17840860.5
(22) Date of filing: 28.06.2017
(51) Int. Cl.: H04L 12/14, H04M 15/00, H04W 4/24

(54) **CHARGING METHODS AND DEVICES**
ABRECHNUNGSVERFAHREN UND VORRICHTUNGEN
PROCÉDÉS ET DISPOSITIFS DE FACTURATION

(30) Priority: 15.08.2016 CN 201610671813
(43) Date of publication of application: 17.04.2019
(73) Proprietor: Huawei Technologies Co., Ltd., Longgang District Shenzhen, Guangdong 518129 (CN)
(72) Inventor: JIA, Jiangtao, Shenzhen Guangdong 518129 (CN); CHAI, Xiaoqian, Shenzhen Guangdong 518129 (CN); SUN, Ruinan, Shenzhen Guangdong 518129 (CN)
(74) Representative: Maiwald Patent- und Rechtsanwaltsgesellschaft mbH
(86) International application number: PCT/CN2017/090611
(87) International publication number: WO 2018/032884

(56) References cited:
- EP-A1- 3 010 260
- WO-A1-2016/028927
- CN-A- 104 734 931
- CN-A- 105 284 094
- "Network Functions Virtualisation (NFV); Management and Orchestration", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV MAN, no. V1.1.1, 1 December 2014 (2014-12-01), XP014235740,
- HUAWEI TECH (UK) CO ET AL: "EVE008 Section 6.1 Online Charging Architecture for NFV", ETSI DRAFT; NFVEVE(16)000220, EUROPEAN TELECOMMUNICATIONS STANDARDS INSTITUTE (ETSI), 650, ROUTE DES LUCIOLES ; F-06921 SOPHIA-ANTIPOLIS ; FRANCE, [Online] vol. WG - NFV EVE - Evolution and Ecosystem, 5 December 2016 (2016-12-05), pages 1-2, XP014282898, [retrieved on 2016-12-05]

## Description

### TECHNICAL FIELD

The present invention relates to the communications field, and in particular, to a charging method and apparatus and a system.

### BACKGROUND

A network function virtualization (English: Network Function Virtualization, NFV for short) technology may be simply understood as migration of functions of network elements used in a telecommunications network from a current dedicated hardware platform to a general-purpose commercial off-the-shelf (Commercial off-the-shelf, COTS) server. The network elements used in the telecommunications network are transformed into independent applications by using the NFV technology, so that the functions of the network elements can be flexibly deployed on an all-in-one infrastructure platform constructed based on standard servers, storages, and other devices such as switches. In addition, a virtualization technology is used for resource pooling and virtualization of infrastructure hardware devices, so that virtual resources can be provided to upper-layer applications, thereby decoupling the applications from hardware. In this way, virtual resources can be rapidly added for each application to expand system capacity rapidly or virtual resources can be rapidly reduced to reduce system capacity, thereby greatly improving network flexibility. General-purpose COTS servers are used to form a shared resource pool, so that it is not necessary to deploy hardware devices separately for a newly developed service, thereby greatly shortening a period of time required to launch a new service.
The article titled "Network Functions Virtualisation (NFV); Management and Orchestration", published by the GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV MAN, no. V1.1.1, 1 December 2014 (2014-12-01), XP014235740 describes systems and methods for network functions virtualization.
EP 3 010 260 A1 describes systems and methods for network charging, which includes: a data centre management network element, upon reception of a charging resource request message from a controller, supports a charging function of a processing network element by a virtual machine and feeding back information of the processing network element to the controller.

The basis of the NFV technology includes a cloud computing technology and a virtualization technology. General-purpose COTS hardware devices such as computing devices, storage devices, and network devices may be divided into a variety of virtual resources by using the virtualization technology for use by various upper-layer applications. The applications are decoupled from hardware by using the virtualization technology, so that a speed of providing virtual resources is greatly increased. Applications can be flexibly scaled up or down by using the cloud computing technology to enable virtual resources to match service load, so that efficiency of utilizing virtual resources is improved and a response speed of a system is increased.

There is no NFV architecture-based charging method at present.

### SUMMARY

The present invention is defined by the appended independent claims. Dependent claims constitute embodiments of the invention. Although the invention is only defined by the claims, the below embodiments, examples and aspects are only present for the sole purpose in aiding in understanding the background and advantages of the invention.

### BRIEF DESCRIPTION OF DRAWINGS

To describe the technical solutions in the embodiments of the present invention or the prior art more clearly, the following briefly describes the accompanying drawings required for describing the embodiments or the prior art.
FIG. 1 is a schematic diagram of an NFV system 100 to which an embodiment of the present invention is applied;
FIG. 2 is a schematic structural diagram of hardware of a computer device 200 according to an embodiment of the present invention;
FIG. 3 is a flowchart showing an example of a charging method 300 according to an embodiment of the present invention;
FIG. 4 is a flowchart showing an example of a charging method 400 according to an embodiment of the present invention;
FIG. 5 is a flowchart showing an example of a charging method 500 according to an embodiment of the present invention;
FIG. 6 is a schematic diagram showing positions of functional logical entities according to an embodiment of the present invention;
FIG. 7 is a schematic diagram showing positions of functional logical entities according to an embodiment of the present invention;
FIG. 8 is a schematic structural diagram of a charging apparatus 800 according to an embodiment of the present invention; and
FIG. 9 is a schematic structural diagram of a charging apparatus 900 according to an embodiment of the present invention.

### DESCRIPTION OF EMBODIMENTS

In the following description, to illustrate rather than limit, specific details such as a particular system structure, an interface, and a technology are provided to make a thorough understanding of the present invention. However, persons skilled in the art should know that the present invention may be practiced in other embodiments without these specific details. In other cases, detailed descriptions of well-known apparatuses, circuits, and methods are omitted, so that the present invention is described without being obscured by unnecessary details.

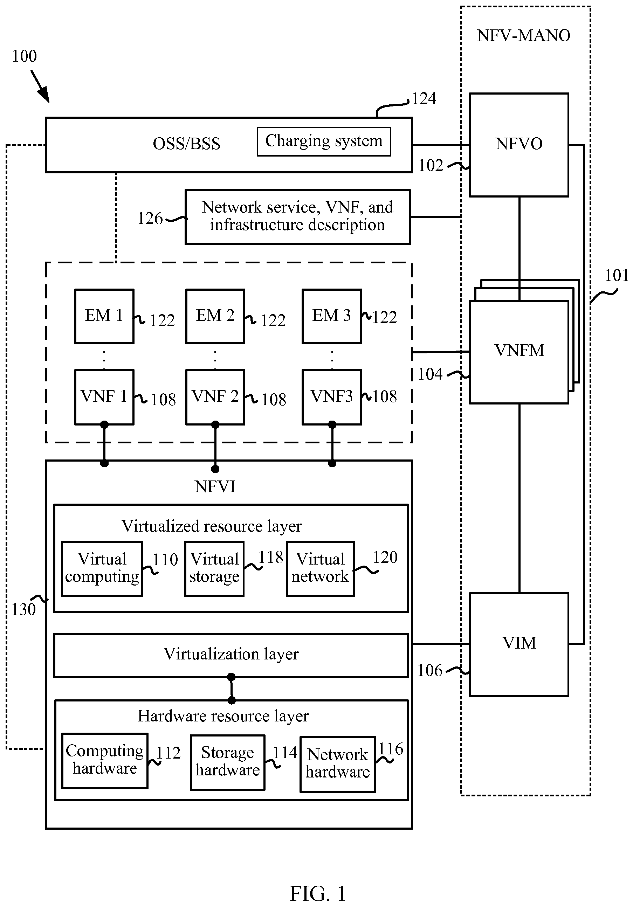

FIG. 1 is a schematic diagram of an NFV system 100 to which an embodiment of the present invention is applied. The NFV system 100 may be implemented by using a variety of networks such as a data center network, a provider network, or a local area network. The NFV system 100 includes an NFV management and orchestration (NFV Management and Orchestration, NFV MANO) system 101, an NFV infrastructure (NFV Infrastructure, NFVI) 130, a plurality of virtual network functions (Virtual Network Function, VNF) 108, a plurality of element managements (Element Management, EM) 122, an operation-support management system (Operation-Support System, OSS)/business support system (Business Support System, BSS) 124, and network service, VNF and infrastructure description (Network Service, VNF and Infrastructure Description) 126. The NFV management and orchestration system 101 includes an NFV orchestrator (NFV Orchestrator, NFVO) 102, one or more VNF managers VNFM (VNF Manager, VNFM) 104, and a virtualized infrastructure manager (Virtualized Infrastructure Manager, VIM) 106. The NFVI 130 includes computing hardware 112, storage hardware 114, network hardware 116, a virtualization layer (Virtualization Layer), a virtual computing 110, a virtual storage 118, and a virtual network 120. The network service, the VNF and infrastructure description 126, and the OSS/BSS 124 are further discussed in the ETSI GS NFV 002 V1.1.1 standard.

The NFV MANO system 101 is configured to perform supervision and management on the VNFs 108 and the NFVI 130.

The NFVO 102 may implement a network service (Network Service, NS) on the NFVI 130, or may execute a resource related request from the one or more VNFMs 104, send configuration information to the VNFM 104, and collect status information of the VNFs 108. In addition, the NFVO 102 may communicate with the VIM 106 to implement resource allocation or reservation and exchange virtualized hardware resource configuration and status information.

The VNFM 104 may manage one or more VNFs 108. The VNFM 104 may perform a variety of management functions such as instantiating, updating, querying, scaling, and terminating the VNFs 108.

The VIM 106 may perform a function of managing a resource such as managing allocation of infrastructure resources (for example, adding a resource to a virtual container), or may perform an operation function such as collecting NFVI failure information. The VNFM 104 and the VIM 106 may communicate with each other to perform resource allocation and exchange virtualized hardware resource configuration and status information.

The NFVI 130 includes hardware resources, software resources, or a combination of both to complete deployment of a virtualized environment. In other words, the hardware resources and the virtualization layer are used to provide virtualized resources such as virtual machines and another form of virtual containers for the VNFs 108. The hardware resources include the computing hardware 112, the storage hardware 114, and the network hardware 116. The computing hardware 112 may be commercial off-the-shelf hardware or custom hardware used to provide processing and computing resources. The storage hardware 114 may be storage capacity that is provided in a network or storage capacity (a local memory located in a server) that resides in the storage hardware 114 itself. In an implementation solution, the resources from the computing hardware 112 and the storage hardware 114 may be pooled together. The network hardware 116 may be a switch, a router, or any other network device configured to perform a switching function. The network hardware 116 may span a plurality of domains and may include a plurality of networks that are interconnected via one or more transport networks.

The virtualization layer in the NFVI 130 may abstract the hardware resources and decouple the VNFs 108 from a physical layer to provide virtualized resources to the VNFs 108. The virtualization layer includes the virtual computing 110, the virtual storage 118, and the virtual network 120. The virtual computing 110 and the virtual storage 118 may be provided to the VNFs 108 in a form of virtual machines or other virtual containers. For example, one or more VNFs 108 may be deployed on a virtual machine (Virtual Machine). The virtualization layer abstracts the network hardware 116 to form the virtual network 120. The virtual network 120 may include a virtual switch (Virtual Switch). The virtual switch is used to provide a connection between virtual machines. In addition, the transport network in the network hardware 116 may be virtualized using a centralized control plane and a separate forwarding plane (for example, software defined networking, SDN).

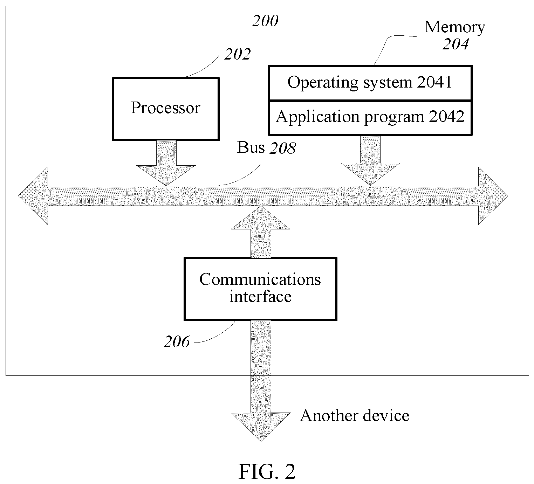

An NFVO may be implemented in a form of a computer device. A charging system is included in the BSS, and may be implemented in a form of a computer device. FIG. 2 is a schematic structural diagram of hardware of a computer device 200 according to an embodiment of the present invention. As shown in FIG. 2, the computer device 200 includes a processor 202, a memory 204, a communications interface 206, and a bus 208. The processor 202, the memory 204, and the communications interface 206 are in communication connection with each other by using the bus 208.

The processor 202 may be a general-purpose central processing unit (Central Processing Unit, CPU), a microprocessor, an application-specific integrated circuit (Application-Specific Integrated Circuit, ASIC), or one or more integrated circuits, to execute a related program to implement the technical solution provided in this embodiment of the present invention.

The memory 204 may be a read-only memory (Read-Only Memory, ROM), a static storage device, a dynamic storage device, or a random-access memory (Random-access Memory, RAM). The memory 204 may store an operating system 2041 and another application program 2042. During implementation of the technical solution provided in this embodiment of the present invention by using software or firmware, program code for implementing the technical solution provided in this embodiment of the present invention is stored in the memory 204 and is executed by the processor 202.

The communications interface 206 uses a transmit and receive apparatus, for example, but not limited to a transceiver, to implement communication between the interface and another device or communications network.

The bus 208 may include a channel, through which information is delivered between parts (for example, the processor 202, the memory 204, and the communications interface 206).

When the computer device 200 is an NFVO, the processor 202 is configured to: receive a quota from the charging system; when a trigger event occurs, obtain charging information from a virtual network function manager VNFM and charging information from a virtualized infrastructure manager VIM, where the trigger event includes an internal trigger event or an external trigger event, occurrence of the internal trigger event is actively detected by the processor 202, occurrence of the external trigger event is actively reported by the VNFM or the VIM to the processor 202, and the charging information from the VNFM includes usage information of the quota; and send the charging information from the VNFM and the charging information from the VIM to the charging system.

When the computer device 200 is a charging system, the processor 202 is configured to: send the quota to the NFVO; receive charging information from the NFVO, where the charging information carries the usage information of the quota, and the charging information includes the charging information from the VNFM and the charging information from the VIM; and perform charging based on the received charging information.

VNF instances in an NFV architecture are usually not provided by a same vendor, and it is difficult to collect and jointly use charging information. In this embodiment, the NFVO reports the charging information from the VNFM and the charging information from the VIM to the charging system, and the charging system performs charging based on the received charging information, so that NFV architecture-based charging is implemented.

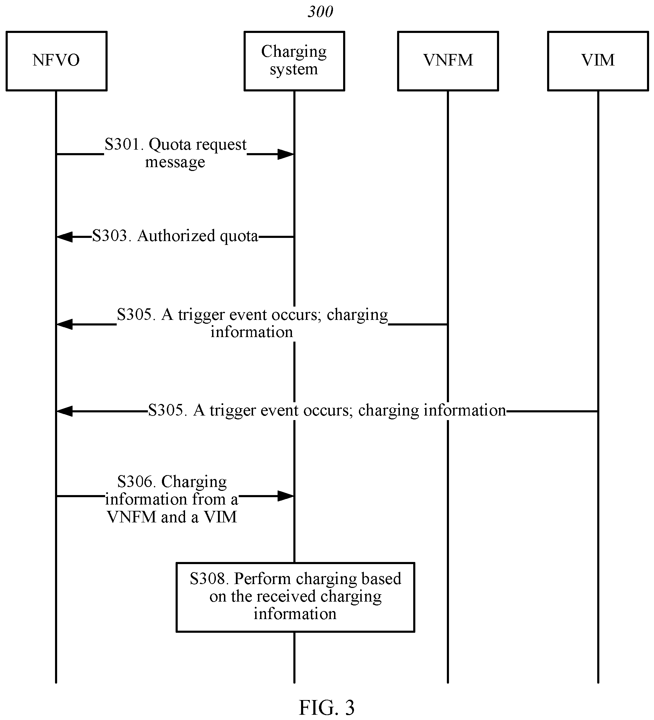

FIG. 3 is a flowchart showing an example of a charging method 300 according to an embodiment of the present invention. During specific implementation, the charging method 300 may be performed by the NFVO 102, the VNFM 104, and the VIM 106 that are shown in FIG. 1 and the charging system included in the BSS 124 shown in FIG. 1.

S301: The NFVO sends a quota request message to the charging system.

S302: The charging system receives the quota request message from the NFVO.

Specifically, the NFVO sends the quota request message by extending an existing interface Os-Ma-nfvo between the NFVO and the BSS, or may send the quota request message by defining a new interface (for example, by defining a new interface based on a requirement of the Diameter protocol).

S303: The charging system sends a quota to the NFVO.

Optionally, the quota has a granularity of an NS or a granularity of a VNF. The quota is used by the NFVO to control use by a network service NS or use by a virtual network function VNF instance.

S304: The NFVO receives the quota from the charging system.

S305: When a trigger event occurs, the NFVO obtains charging information from the virtual network function manager VNFM and charging information from the virtualized infrastructure manager VIM, where the trigger event includes an internal trigger event or an external trigger event, and the charging information from the VNFM includes usage information of the quota.

Specifically, the charging information from the VNFM further includes VNF related parameters. The VNF related parameters include a VNF instance identifier, a VNF vendor, VNF abnormality information, and the like.

For example, the charging information reported by the VNFM may include the following information shown in Table 1:

**Table 1**

| Parameter name | Description |
|---|---|
| VNF list (VNF list) | Provide information about a VNF included in a network service, including: |
| | VNF ID: VNF instance identifier |
| | VNF vendor: VNF vendor |
| | VNF abnormality information, including: alarm, re-instantiation, calls per second (calls per second, CPS), and the like of the VNF |
| Quota usage information (quota usage information) | Quota usage details, corresponding to a quota such as a duration quota or an event quota delivered by a charging system |

One network service NS includes one or more VNF instances. The VNF instance is a concept in the prior art, means a run-time instantiation (run-time instantiation) of VNF software, and is a result of completing instantiation of virtualization deployment units (virtualization deployment unit, VDU) of the run-time instance and connection between the VDUs, VNF deployment and operation information captured during use of a VNF description (VNF Description, VNFD) 126, and additional run-time-instance-specific information and constraints (instance-specific information and constraints).

When the quota has a granularity of a VNF, the charging information sent by the VNFM carries quota usage information of the VNF instance. When the quota has a granularity of an NS, the charging information sent by the VNFM carries quota usage information of the VNF instance, and the NFVO determines quota usage information of the NS based on the quota usage information of the VNF instance. For example, the quota is that use of the NS is allowed for 10 hours. The NS includes three VNF instances: a VNF 1, a VNF 2, and a VNF 3. After the charging system delivers the quota, the VNF 1, the VNF 2, and the VNF 3 are instantiated at different time. The VNF 1, the VNF 2, and the VNF 3 have operated for 8 hours, 5 hours, and 1 hour, respectively. The charging information sent by the VNFM carries quota usage information being 8 hours of the VNF 1, quota usage information being 5 hours of the VNF 2, and quota usage information being 1 hour of the VNF 3. The NFVO uses the longest duration being 8 hours as the quota usage information of the NS.

When the quota has a granularity of a VNF, the NFVO applies for the quota for the VNF instances separately. For example, the NS includes three VNF instances: a VNF 1, a VNF 2, and a VNF 3. If the quota of the VNF 1 is used up, regardless of whether the quotas of the VNF 2 and the VNF 3 are used up, the NFVO applies for the quota again for the VNF 1. When the quota has a granularity of an NS, the NFVO applies for the quota together for all the VNF instances. For example, the NS includes three VNF instances: a VNF 1, a VNF 2, and a VNF 3. The NFVO applies for the quota again for the VNF 1, the VNF 2, and the VNF 3, provided that quota usage of one of the VNF instances reaches the delivered quota.

Specifically, the charging information from the VIM includes resource usage information of a virtual machine (virtual machine, VM).

For example, the charging information reported by the VIM may include the following information shown in Table 2:

**Table 2**

| Parameter name | Description |
|---|---|
| VM list (VM list) | Provide information about a VM used in a VNF instance, including: |
| | VM ID: Virtual machine identifier |
| | VM resource usage information: |
| | CPU: CPU usage information |
| | Memory: Memory usage information |
| | Storage: Storage usage information |
| | Network bandwidth: Network bandwidth usage information |
| Time information (time information) | Record use duration of the VM |

The resource usage information of the VM may be: for example, within two hours, a CPU usage ratio of 30%, a memory usage ratio of 40%, storage usage of 50 G, and a network bandwidth data amount of 300 G.

Specifically, the internal trigger event includes a network service NS state change or a VNF state change. The NS state change includes at least one of NS instance update (Network service instance update), NS instance scaling out (Network service instance scaling out), NS instance scaling in (Network service instance scaling in), NS instance scaling up/down (Network service instance scaling up/down), NS instantiation (Network service instantiation), or NS instance termination (Network service instance termination). The VNF state change includes at least one of VNF scaling out (VNF scaling out), VNF scaling in (VNF scaling in), VNF scaling up/down (VNF scaling up/down), VNF instantiation (VNF instantiation), VNF instance termination (the VNF instance termination), a NFVI resources allocation request for a VNF (NFVI resources allocation request for a VNF), or a required-resource release request for a VNF (NFVI resources release request for a VNF).

Specifically, the external trigger event includes status information reported by the VNFM or status information reported by the VIM, the status information reported by the VNFM includes at least one of a change in a quantity of virtual machines VMs used in a VNF instance, a VNF abnormality event, and a state change of a reserved VNF instance, or the status information reported by the VIM includes a change in an area to which a resource used in the VNF belongs or a change in a state of a resource reserved by the VIM. The state change of the reserved VNF instance includes a change of the VNF instance from an active state to a waiting state, or a change from a waiting state to an active state. The change in the state of the resource reserved by the VIM includes a change of the reserved resource from an active state to a waiting state, or a change from a waiting state to an active state. The VNF abnormality event includes VNF re-instantiation, alarm, and that a quantity of times of calls per second CPS is less than or exceeds a threshold.

Occurrence of the internal trigger event may be actively detected by the NFVO. For example, the NFVO may request regularly a state of the NS or a state of the VNF. Occurrence of the external trigger event may be actively reported by the VNFM or the VIM to the NFVO. For example, when the VNF is re-instantiated, the VNFM reports this event to the NFVO.

An event report mechanism that includes the internal trigger event and the external trigger event enables the NFVO to determine more accurately and comprehensively moments of obtaining and reporting the charging information, thereby enhancing charging accuracy.

When the trigger event occurs, the NFVO obtains the charging information from the VNFM and the VIM. For example, when detecting NS instance scaling in, the NFVO obtains the charging information from the VNFM and the VIM. Specifically, the charging information obtained from the VNFM may include a VNF instance identifier, a VNF operation start time, and operation duration. The charging information obtained from the VIM may include a VM identifier, a VM use start time, and usage information of a CPU resource, a memory resource, a storage resource, a network resource, and the like. Alternatively, for example, when receiving information that is reported by the VNFM and that is about a change of the reserved VNF instance from a waiting state to an active state, the NFVO obtains the charging information from the VNFM and the VIM.

S306: The NFVO sends the charging information from the VNFM and the charging information from the VIM to the charging system.

S307: The charging system receives charging information from the NFVO, where the charging information carries the usage information of the quota, and the charging information includes the charging information from the VNFM and the charging information from the VIM.

S308. The charging system performs charging based on the received charging information.

Specifically, the NFVO sends the charging information by using the extended existing interface Os-Ma-nfvo between the NFVO and the BSS in the foregoing step 302, or sends the charging information by using the new interface defined in the foregoing step 302.

Before the sending, by the NFVO, the charging information from the VNFM and the charging information from the VIM to the charging system, the NFVO associates the charging information from the VNFM and the charging information from the VIM, and the sending, by the NFVO, the charging information from the VNFM and the charging information from the VIM to the charging system is: sending, by the NFVO, the associated charging information to the charging system.

For example, the associated charging information may include the following information shown in Table 3:

**Table 3**

| Parameter name | Description |
|---|---|
| Network service identifier (Network Service ID) | Identifier that uniquely indicates a network service |
| VNF list (VNF list) | Provide information about a VNF included in a network service, including: |
| | VNF ID: VNF instance identifier |
| | VNF vendor: VNF vendor |
| | VNF abnormality information, including: alarm, re-instantiation, CPS, and the like of the VNF |
| VM list (VM list) | Provide information about a VM used in a VNF instance, including: |
| | VM ID: Virtual machine identifier |
| | VM resource usage information: |
| | CPU: CPU usage information |
| | Memory: Memory usage information |
| | Storage: Storage usage information |
| | Network bandwidth: Network bandwidth usage information |
| Quota usage information (Quota usage information) | Quota usage details, corresponding to a quota such as a duration quota or an event quota delivered by a charging system |

Charging information of the NS may be obtained after the charging information is associated, so that the charging system may charge use of the NS.

Optionally, the NFVO associates the charging information from the VNFM and the charging information from the VIM based on a correspondence between a VNF instance identifier and a VM identifier. The correspondence between a VNF instance identifier and a VM identifier may be configured in the NFVO in advance.

Optionally, the NFVO stores an identifier of an NS and an identifier of a VNF instance included in the NS (or a correspondence between an NS identifier and a VNF instance identifier). The NFVO associates a VNF instance in the charging information from the VNFM with a corresponding NS based on the identifier of the VNF instance included in the NS and a VNF instance identifier in the charging information from the VNFM, so that the charging information of the NS can be obtained. The charging information of the NS is sent to the charging system, and the charging system charges use of the NS based on the charging information.

For example, the charging information is sent to the charging system during the foregoing NS instance scaling in. The NFVO associates the charging information from the VNFM and the charging information from the VIM. The obtained charging information of the NS includes an identifier of the NS, a use start time of the NS, use duration of the NS, a VNF list, and a VM list. The VM list includes the usage information of a CPU resource, a memory resource, a storage resource, and a network resource.

Optionally, the NFVO may not associate the charging information from the VNFM and the charging information from the VIM, but send the charging information to the charging system instead. After the charging system receives the charging information from the VNFM and the charging information from the VIM, the charging system associates the charging information from the VNFM and the charging information from the VIM, and the performing, by the charging system, charging based on the received charging information is: performing, by the charging system, charging based on the associated charging information.

The received charging information is associated by the charging system instead of the NFVO, so that load and complexity of the NFVO can be reduced.

Optionally, the charging system associates the charging information from the VNFM and the charging information from the VIM based on a correspondence between a VNF instance identifier and a VM identifier, and associates a VNF instance in the charging information from the VNFM with a corresponding NS based on the identifier of the VNF instance included in the NS, so that the charging information of the NS can be obtained, the charging system charges use of the NS based on the charging information. The correspondence between a VNF instance identifier and a VM identifier (or the identifier of the VM used in the VNF instance) may be configured in the charging system in advance, or may be sent by the NFVO to the charging system. The identifier of the NS and the identifier of the VNF instance included in the NS may be configured in the charging system in advance, or may be sent by the NFVO to the charging system.

Optionally, the charging system may charge use of the VNF based on the charging information from the VNFM and the charging information from the VIM.

Specifically, the charging information from the VNFM may further include operation start time of VNF instances and use duration of the VNF instances. The charging information from the VIM may further include VM use start time and usage information of a CPU resource, a memory resource, a storage resource, a network resource, and the like. The charging system may charge use of the VNF based on the information.

According to the charging method provided in this embodiment of the present invention, the NFVO reports the charging information from the VNFM and the charging information from the VIM to the charging system, and the charging system performs charging based on the received charging information, so that NFV architecture-based charging is implemented.

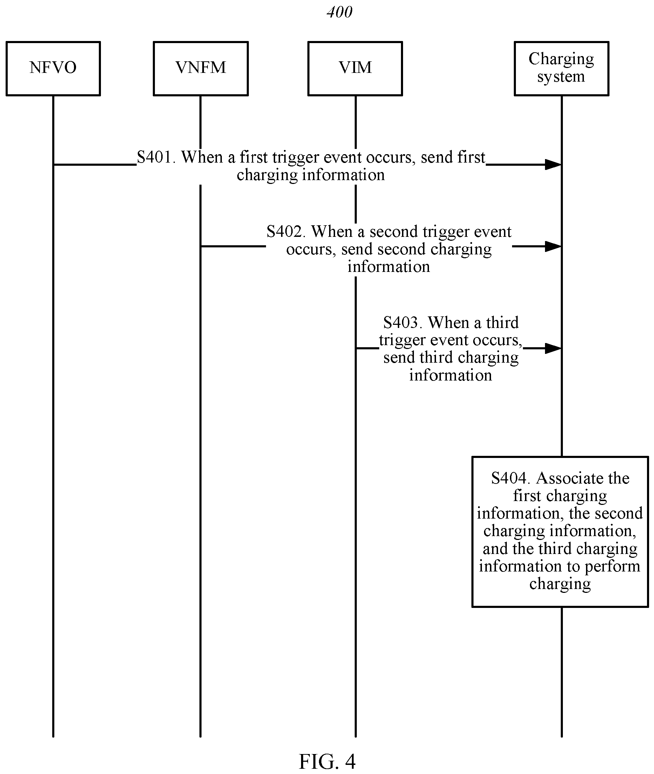

FIG. 4 is a flowchart showing an example of a charging method 400 according to an embodiment of the present invention. During specific implementation, the charging method 400 may be performed by the NFVO 102, the VNFM 104, and the VIM 106 that are shown in FIG. 1 and the charging system included in the BSS 124 shown in FIG. 1.

S401: When a first trigger event occurs, the NFVO sends first charging information to the charging system.

Specifically, the NFVO sends the first charging information by using an existing interface Os-Ma-nfvo between the NFVO and the BSS, or may send the first charging information by defining a new interface (for example, by defining a new interface based on a requirement of the Diameter protocol).

Specifically, the first trigger event includes a periodic report (which may be implemented in a manner of setting a timer) or an NS state change. The NS state change includes at least one of NS instance update, NS instance scaling out, NS instance scaling in, NS instance scaling up/down, NS instantiation, or NS instance termination.

The first trigger event may be configured in the NFVO in advance. The NFVO stores the collected first charging information before the first trigger event occurs, and sends the first charging information to the charging system when the first trigger event occurs.

Specifically, the first charging information includes: an identifier of an NS, an identifier of a VNF instance included in the NS, an identifier of a VM used in the VNF instance, and usage information of the NS. The usage information of the NS may be use duration of the NS or a quantity of times of using the NS.

Optionally, the first charging information may include the following information, as shown in Table 4:

**Table 4**

| Parameter name | Description |
|---|---|
| Network service identifier (Network Service ID) | Identifier that uniquely indicates a network service |
| VNFlist (VNF List) | Provide information about a VNF included in a network service, including: |
| | VNF ID: VNF instance identifier |
| | VNF vendor: VNF vendor |
| | VM List: Identifier of a VM used in a VNF instance |
| NS operation time information (operation time information) | Record operation duration of a network service |

S402: When a second trigger event occurs, the VNFM sends second charging information to the charging system.

Specifically, the VNFM may send the second charging information by using a new interface defined between the VNFM and the charging system.

Specifically, the second trigger event includes a periodic report or a VNF state change. The VNF state change includes at least one of VNF scaling out, VNF scaling in, VNF scaling up/down, VNF instantiation, or VNF instance termination. The second trigger event may be configured in the VNFM in advance. The VNFM stores the collected second charging information before the second trigger event occurs, and sends the second charging information to the charging system when the second trigger event occurs.

Specifically, the second charging information includes an identifier of a VNF instance and usage information of the VNF instance. The usage information of the VNF instance includes use duration of the VNF instance or a quantity of times of using the VNF instance.

Optionally, the second charging information may include the following information shown in Table 5:

**Table 5**

| Parameter name | Description |
|---|---|
| VNF identifier (VNF ID) | Identifier that uniquely indicates a VNF instance |
| | VNF vendor: VNF vendor |
| | VNF abnormality information, including: alarm, re-instantiation, calls per second (calls per second, CPS), and the like of a VNF |
| Operation time information (operation time information) | Record operation duration of a VNF instance |

S403: When a third trigger event occurs, the VIM sends third charging information to the charging system.

Specifically, the VIM may send the third charging information by using a new interface defined between the VIM and the charging system.

Specifically, the third trigger event includes a periodic report or a change in a state of a resource required by a VNF. The change in the state of the resource required by the VNF includes a required-resource allocation request for a VNF or a required-resource release request for a VNF.

The third trigger event may be configured in the VIM in advance. The VIM stores the collected third charging information before the third trigger event occurs, and sends the third charging information to the charging system when the third trigger event occurs.

Specifically, the third charging information includes an identifier of a VM and usage information of the VM. The usage information of the VM includes information about a resource used by the VM or duration of the VM.

Optionally, the third charging information may include the following information shown in Table 6:

**Table 6**

| Parameter name | Description |
|---|---|
| VM identifier (VM ID) | Identifier that uniquely determines a VM |
| | Provide information about a CPU resource, a network resource, a storage resource, a memory resource, and the like included in resources (Resources): |
| | CPU: CPU usage information |
| | Memory: Memory usage information |
| | Storage: Storage usage information |
| | Network bandwidth: Network bandwidth usage information |
| Time information (time information) | Record use duration of resources |

S404: The charging system associates the first charging information, the second charging information, and the third charging information to perform charging.

Specifically, the charging system associates the first charging information and the second charging information based on a VNF instance identifier in the first charging information and a VNF instance identifier in the second charging information; and associates the first charging information and the third charging information based on a correspondence between a VNF instance identifier and a VM identifier in the first charging information and a VM identifier in the third charging information. The first charging information includes an identifier of a VNF instance included in an NS. Therefore, charging information of the NS can be obtained after the association. The charging system charges use of the NS. Because the second charging information includes the usage information of the VNF instance, use of the VNF can also be charged after the association.

Optionally, in S402, the VNFM sends the second charging information to the charging system by using the NFVO. Specifically, when the second trigger event occurs, the VNFM sends the second charging information to the NFVO. When the first trigger event occurs, the NFVO sends the second charging information to the charging system. Specifically, the VNFM sends the second charging information by using an existing interface Or-vnfm between the NFVO and the VNFM, or may send the second charging information by defining a new interface.

Optionally, in S403, the VIM sends the third charging information to the charging system by using the NFVO. Specifically, when the third trigger event occurs, the VIM sends the third charging information to the NFVO. When the first trigger event occurs, the NFVO sends the third charging information to the charging system. Specifically, the VIM sends the third charging information by using an existing interface Or-Vi between the NFVO and the VIM, or may send the third charging information by defining a new interface.

The foregoing description manner of using the order "S401, S402, S403" is used to clearly describe this embodiment of the present invention, but is not used to limit an order in which the NFVO, the VNFM, and the VIM send the charging information to the charging system. When the respective trigger events occur, the charging information is correspondingly sent to the charging system.

According to the charging method provided in this embodiment of the present invention, the first charging information, the second charging information, and the third charging information are sent to the charging system, so that the charging system can associate the received charging information and perform charging, and NFV architecture-based charging is implemented.

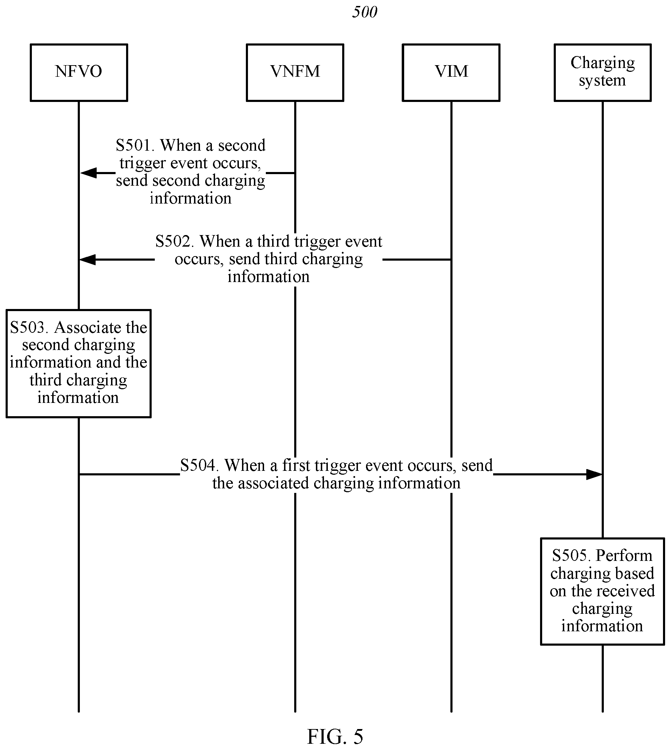

FIG. 5 is a flowchart showing an example of a charging method 500 according to an embodiment of the present invention. During specific implementation, the charging method 500 may be performed by the NFVO 102, the VNFM 104, and the VIM 106 that are shown in FIG. 1 and the charging system included in the BSS 124 shown in FIG. 1. Different from the embodiment in FIG. 4, in the embodiment in FIG. 5, second charging information and third charging information are associated by the NFVO.

S501: When a second trigger event occurs, the VNFM sends the second charging information to the NFVO.

Specifically, the VNFM sends the second charging information by using an existing interface Or-vnfm between the NFVO and the VNFM, or may send the second charging information by defining a new interface.

Specifically, for related content of the second trigger event and the second charging information, refer to the related content in S402 in the embodiment in FIG. 4.

S502: When a third trigger event occurs, the VIM sends the third charging information to the NFVO.

Specifically, the VIM sends the third charging information by using an existing interface Or-Vi between the NFVO and the VIM, or may send the third charging information by defining a new interface.

Specifically, for related content of the third trigger event and the third charging information, refer to the related content of S403 in the embodiment in FIG. 4.

S503: The NFVO associates the second charging information and the third charging information, to obtain the associated charging information.

Specifically, the NFVO stores an identifier of an NS, an identifier of a VNF instance included in the NS, and an identifier of a VM used in the VNF instance (or a correspondence between a VNF instance identifier and a VM identifier).

The NFVO associates usage information of the VNF instance in the second charging information with a corresponding NS based on the identifier of the VNF instance included in the NS and the identifier of the VNF instance included in the second charging information; and associates usage information of the VM in the third charging information with a corresponding VNF based on the correspondence between a VNF instance identifier and a VM identifier and the identifier of the VM in the third charging information. Charging information of the NS can be obtained after the association.

S504: When a first trigger event occurs, the NFVO sends the associated charging information to the charging system.

S505: The charging system performs charging based on the received charging information.

Specifically, the NFVO sends the charging information of the NS to the charging system, and the charging system charges use of the NS. Because the charging information of the NS includes the usage information of the VNF instance, the charging system may charge use of the VNF.

The foregoing description manner of using the order "S501, S502" is used to clearly describe this embodiment of the present invention, but is not used to limit an order in which the VNFM and the VIM send the charging information to the NFVO. When the respective trigger events occur, the charging information is correspondingly sent to the NFVO.

According to the charging method provided in this embodiment of the present invention, the associated second charging information and third charging information are sent to the charging system, so that the charging system can perform charging based on the received charging information, and NFV architecture-based charging is implemented.

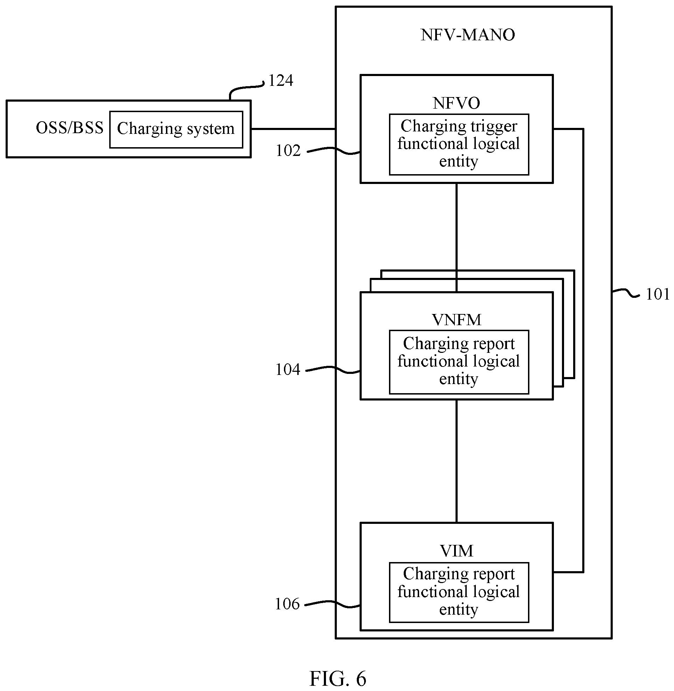

In another implementation of the embodiments of the present invention, the embodiment in FIG. 3 may be performed by a charging trigger functional logical entity included in the NFVO 102 shown in FIG. 1, a charging report functional logical entity included in the VNFM 104 shown in FIG. 1, a charging report functional logical entity included in the VIM 106 shown in FIG. 1, and the charging system included in the BSS 124 shown in FIG. 1. As shown in FIG. 6, specifically, the charging trigger functional logical entity in the NFVO 102 performs S301, S304, S305, and S306 in the embodiment in FIG. 3. In S305, the charging trigger functional logical entity in the NFVO 102 obtains charging information from the charging report functional logical entity in the VNFM 104 and charging information from the charging report functional logical entity in the VIM 106.

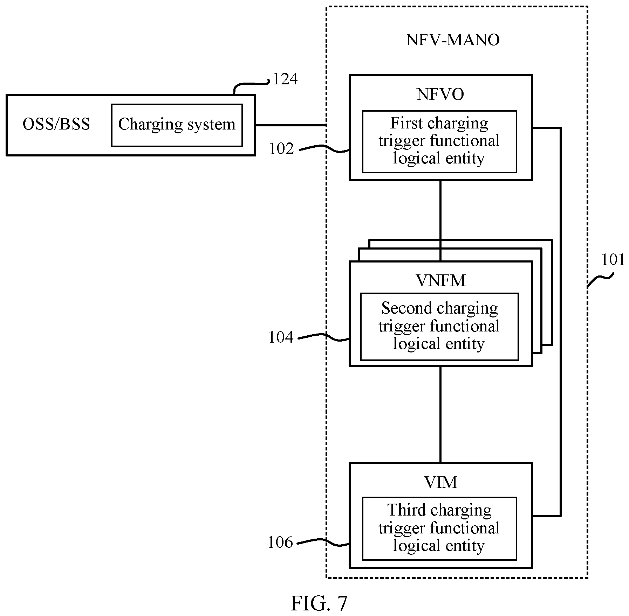

In another implementation of the embodiments of the present invention, the embodiment in FIG. 4 may be performed by a first charging trigger functional logical entity included in the NFVO 102 shown in FIG. 1, a second charging trigger functional logical entity included in the VNFM 104 shown in FIG. 1, a third charging trigger functional logical entity included in the VIM 106 shown in FIG. 1, and the charging system included in the BSS 124 shown in FIG. 1. As shown in FIG. 7, specifically, the first charging trigger functional logical entity performs S401 in the embodiment in FIG. 4, the second charging trigger functional logical entity performs S402 in the embodiment in FIG. 4, and the third charging trigger functional logical entity performs S403 in the embodiment in FIG. 4.

In another implementation of the embodiments of the present invention, the embodiment in FIG. 5 may be performed by the first charging trigger functional logical entity included in the NFVO 102 shown in FIG. 1, the second charging trigger functional logical entity included in the VNFM 104 shown in FIG. 1, the third charging trigger functional logical entity included in the VIM 106 shown in FIG. 1, and the charging system included in the BSS 124 shown in FIG. 1. As shown in FIG. 7, specifically, the second charging trigger functional logical entity performs S501 in the embodiment in FIG. 5, the third charging trigger functional logical entity performs S502 in the embodiment in FIG. 5, and the first charging trigger functional logical entity performs S503 and S504 in the embodiment in FIG. 5.

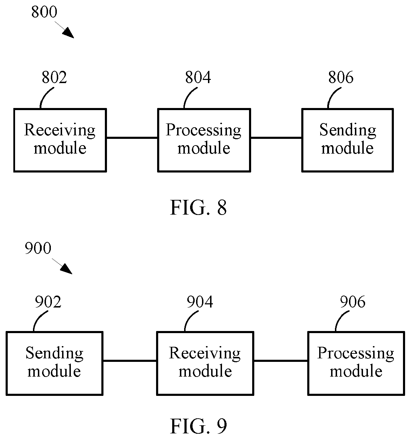

FIG. 8 is a schematic structural diagram of a charging apparatus 800 according to an embodiment of the present invention. The charging apparatus 800 includes a receiving module 802, a processing module 804, and a sending module 806. The charging apparatus 800 is the computer device 200 in FIG. 2 or the NFVO in FIG. 3. The receiving module 802 may be configured to perform S304 in the embodiment in FIG. 3, the processing module 804 may be configured to perform S305 in the embodiment in FIG. 3, and the sending module 806 may be configured to perform S301 and S306 in the embodiment in FIG. 3.

The receiving module 802 is configured to receive a quota from a charging system.

The processing module 804 is configured to: when a trigger event occurs, obtain charging information from a virtual network function manager VNFM and charging information from a virtualized infrastructure manager VIM, where the trigger event includes an internal trigger event or an external trigger event, occurrence of the internal trigger event is actively detected by the processing module 804, occurrence of the external trigger event is actively reported by the the VNFM or the VIM to the processing module 804, and the charging information from the VNFM includes usage information of the quota.

The sending module 806 is configured to send the charging information from the VNFM and the charging information from the VIM to the charging system.

Before the sending module 806 sends the charging information from the VNFM and the charging information from the VIM to the charging system, the processing module 804 is further configured to associate the charging information from the VNFM and the charging information from the VIM, and that the sending module 806 sends the charging information from the VNFM and the charging information from the VIM to the charging system is: sending, by the sending module 806, the associated charging information to the charging system.

Specifically, the processing module 804 associates the charging information from the VNFM and the charging information from the VIM based on a correspondence between a VNF instance identifier and a VM identifier.

The charging information from the VNFM further includes a VNF instance identifier, and the processing module 804 associates a VNF instance in the charging information from the VNFM with a corresponding NS based on the VNF instance identifier and a correspondence between an NS identifier and a VNF instance identifier.

Optionally, the charging information from the VIM includes resource usage information of the VM.

For specific content about the internal trigger event and the external trigger event, refer to the description in S305 in the embodiment in FIG. 3. Details are not described herein again.

FIG. 9 is a schematic structural diagram of a charging apparatus 900 according to an embodiment of the present invention. The charging apparatus 900 includes a sending module 902, a receiving module 904, and a processing module 906. The charging apparatus 900 is the computer device 200 in FIG. 2 or the charging system in FIG. 3. The sending module 902 may be configured to perform S303 in the embodiment in FIG. 3, the receiving module 904 may be configured to perform S302 and S307 in the embodiment in FIG. 3, and the processing module 906 may be configured to perform S308 in the embodiment in FIG. 3.

The sending module 902 is configured to send a quota to an NFVO.

The receiving module 904 is configured to receive charging information from the NFVO, where the charging information carries usage information of the quota, and the charging information includes charging information from a VNFM and charging information from a VIM.

The processing module 906 is configured to perform charging based on the received charging information.

After the receiving module 904 receives the charging information from the VNFM and the charging information from the VIM, the processing module 906 is further configured to associate the charging information from the VNFM and the charging information from the VIM, and that the processing module 906 performs charging based on the received charging information is:
performing, by the processing module 906, charging based on the associated charging information.

Specifically, the processing module 906 associates the charging information from the VNFM and the charging information from the VIM based on a correspondence between a VNF instance identifier and a VM identifier.

The charging information from the VNFM further includes a VNF instance identifier, and the processing module 906 associates a VNF instance in the charging information from the VNFM with a corresponding NS based on the VNF instance identifier and a correspondence between an NS identifier and a VNF instance identifier.

According to the charging method provided in this embodiment of the present invention, the charging information from the VNFM and the charging information from the VIM are reported to the charging system, and the charging system performs charging based on the received charging information, so that NFV architecture-based charging is implemented.

The "modules" in the embodiments in FIG. 8 and FIG. 9 may be application-specific integrated circuits (Application-Specific Integrated Circuit, ASIC), electronic circuits, processors that execute one or more software or firmware programs, memories, combined logic circuits, and other components that provide the foregoing functions. Optionally, the foregoing charging apparatuses are implemented in a form of computer devices. The foregoing receiving modules and sending modules may be implemented by using processors, memories, and communications interfaces of the computer devices. The foregoing processing modules may be implemented by using the processors and the memories of the computer devices.

It should be noted that although only the processor 202, the memory 204, the communications interface 206, and the bus 208 are shown in the computer device 200 shown in FIG. 2, during specific implementation, persons skilled in the art should understand that the foregoing charging apparatuses further include other devices required to implement normal operation. In addition, according to specific requirements, persons skilled in the art should understand that the foregoing charging apparatuses may further include hardware devices for implementing other additional functions. In addition, persons skilled in the art should understand that the foregoing charging apparatuses may include only devices that are indispensable for implementing the embodiments of the present invention but do not necessarily include all the devices shown in FIG. 2.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (ROM, Read-Only Memory), a random-access memory (RAM, Random-access Memory), a magnetic disk, or an optical disc.

Any variation or replacement readily figured out by persons skilled in the art within the technical scope disclosed in the present invention shall fall within the protection scope of the present invention without departing from the scope of the invention as it is depicted in the appended claims.

## Claims

1. A charging method, wherein the method is applied to network function virtualization, NFV, architecture-based charging, and comprises the following steps:
receiving (S304), by a network function virtualization orchestrator, NFVO, a quota from a charging system;
when a trigger event occurs, obtaining (S305), by the NFVO, charging information from a virtual network function manager, VNFM, and charging information from a virtualized infrastructure manager, VIM,, wherein the trigger event comprises an internal trigger event or an external trigger event, occurrence of the internal trigger event is actively detected by the NFVO, occurrence of the external trigger event is actively reported by the VNFM or the VIM to the NFVO, and the charging information from the VNFM comprises usage information of the quota; and
sending (S306), by the NFVO, the charging information from the VNFM and the charging information from the VIM to the charging system, wherein before the sending, by the NFVO, the charging information from the VNFM and the charging information from the VIM to the charging system, the NFVO associates the charging information from the VNFM and the charging information from the VIM, and the sending, by the NFVO, the charging information from the VNFM and the charging information from the VIM to the charging system is: sending, by the NFVO, the associated charging information to the charging system.

2. The method according to claim 1, wherein the NFVO associates the charging information from the VNFM and the charging information from the VIM based on a correspondence between a virtual network function VNF instance identifier and a virtual machine VM identifier.

3. The method according to claim 1 or 2, wherein the charging information from the VNFM further comprises a VNF instance identifier, and the NFVO associates a VNF instance in the charging information from the VNFM with a corresponding NS based on the VNF instance identifier and a correspondence between a network service NS identifier and a VNF instance identifier.

4. The method according to any one of claims 1 to 3, wherein the charging information from the VIM comprises resource usage information of the VM

5. A charging method, wherein the method is applied to network function virtualization, NFV, architecture-based charging, and comprises the following steps:
sending (S303), by a charging system, a quota to a network function virtualization orchestrator, NFVO;
receiving, by the charging system, charging information from the NFVO, wherein the charging information carries usage information of the quota, and the charging information comprises charging information from a virtual network function manager, VNFM, and charging information from a virtualized infrastructure manager, VIM; and
performing (S308), by the charging system, charging based on the received charging information, wherein after the charging system receives the charging information from the VNFM and the charging information from the VIM, the charging system associates the charging information from the VNFM and the charging information from the VIM, and the performing, by the charging system, charging based on the received charging information is:
performing, by the charging system, charging based on the associated charging information.

6. The method according to claim 5, wherein the charging system associates the charging information from the VNFM and the charging information from the VIM based on a correspondence between a VNF instance identifier and a VM identifier.

7. The method according to claim 5 or 6, wherein the charging information from the VNFM further comprises a VNF instance identifier, and the charging system associates a VNF instance in the charging information from the VNFM with a corresponding NS based on the VNF instance identifier and a correspondence between an NS identifier and a VNF instance identifier.

8. A charging apparatus (800), the apparatus being applied to network function virtualization, NFV, architecture-based charging, and comprising: a receiving module (802), a processing module (804), and a sending module (806), wherein
the receiving module is configured to receive a quota from a charging system;
the processing module is configured to: when a trigger event occurs, obtain charging information from a virtual network function manager, VNFM, and charging information from a virtualized infrastructure manager, VIM, wherein the trigger event comprises an internal trigger event or an external trigger event, occurrence of the internal trigger event is actively detected by the processing module, occurrence of the external trigger event is actively reported by the VNFM or the VIM to the processing module, and the charging information from the VNFM comprises usage information of the quota; and
the sending module is configured to send the charging information from the VNFM and the charging information from the VIM to the charging system, wherein before the sending module sends the charging information from the VNFM and the charging information from the VIM to the charging system, the processing module is further configured to associate the charging information from the VNFM and the charging information from the VIM, and that the sending module sends the charging information from the VNFM and the charging information from the VIM to the charging system is: sending, by the sending module, the associated charging information to the charging system.

9. The apparatus according to claim 8, wherein the processing module associates the charging information from the VNFM and the charging information from the VIM based on a correspondence between a virtual network function VNF instance identifier and a virtual machine VM identifier.

10. The apparatus according to claim 8 or 9, wherein the charging information from the VNFM further comprises a VNF instance identifier, and the processing module associates a VNF instance in the charging information from the VNFM with a corresponding NS based on the VNF instance identifier and a correspondence between a network service NS identifier and a VNF instance identifier.

11. A charging apparatus (900), the apparatus being applied to network function virtualization, NFV, architecture-based charging, and comprising: a sending module (902), a receiving module (904), and a processing module (906), wherein
the sending module is configured to send a quota to a network function virtualization orchestrator, NFVO;
the receiving module is configured to receive charging information from the NFVO, wherein the charging information carries usage information of the quota, and the charging information comprises charging information from a virtual network function manager, VNFM, and charging information from a virtualized infrastructure manager, VIM; and
the processing module is configured to perform charging based on the received charging information, wherein after the receiving module receives the charging information from the VNFM and the charging information from the VIM, the processing module is further configured to associate the charging information from the VNFM and the charging information from the VIM, and that the processing module performs charging based on the received charging information is:
performing, by the processing module, charging based on the associated charging information.

12. The apparatus according to claim 11, wherein the processing module associates the charging information from the VNFM and the charging information from the VIM based on a correspondence between a virtual network function VNF instance identifier and a virtual machine VM identifier.

## Patentansprüche

1. Abrechnungsverfahren, wobei das Verfahren auf Abrechnung basierend auf Netzwerkfunktionsvirtualisierungs-, NFV-, Architektur angewendet wird und die folgenden Schritte umfasst:
Empfangen (S304) einer Quote von einem Abrechnungssystem durch einen Netzwerkfunktionsvirtualisierungsorchestrierer, NFVO;
wenn ein Triggerereignis stattfindet, Erhalten (S305) von Abrechnungsinformationen von einem virtuellen Netzwerkfunktionsmanager, VNFM, und Abrechnungsinformationen von einem virtualisierten Infrastrukturmanager, VIM, durch den NFVO, wobei das Triggerereignis ein internes Triggerereignis oder ein externes Triggerereignis umfasst, das Stattfinden des internen Triggerereignisses aktiv durch den NFVO detektiert wird, das Stattfinden des externen Triggerereignisses aktiv durch den VNFM oder den VIM an den NFVO berichtet wird, und die Abrechnungsinformationen von dem VNFM Nutzungsinformationen der Quote umfassen; und
Senden (S306) der Abrechnungsinformationen von dem VNFM und der Abrechnungsinformationen von dem VIM an das Abrechnungssystem durch den NFVO, wobei vor dem Senden der Abrechnungsinformationen von dem VNFM und der Abrechnungsinformationen von dem VIM an das Abrechnungssystem durch den NFVO der NFVO die Abrechnungsinformationen von dem VNFM und die Abrechnungsinformationen von dem VIM zuordnet, und wobei das Senden der Abrechnungsinformationen von dem VNFM und der Abrechnungsinformationen von dem VIM durch den NFVO an das Abrechnungssystem ist: Senden der zugeordneten Abrechnungsinformationen an das Abrechnungssystem durch den NFVO.

2. Verfahren nach Anspruch 1, wobei der NFVO die Abrechnungsinformationen von dem VNFM und die Abrechnungsinformationen von dem VIM basierend auf einer Entsprechung zwischen einem Instanzidentifikator einer virtuellen Netzwerkfunktion, VNF, und einem Identifikator einer virtuellen Maschine, VM, zuordnet.

3. Verfahren nach Anspruch 1 oder 2, wobei die Abrechnungsinformationen von dem VNFM des Weiteren einen VNF-Instanzidentifikator umfassen, und der NFVO eine VNF-Instanz in den Abrechnungsinformationen von dem VNFM mit einem entsprechenden NS basierend auf dem VNF-Instanzidentifikator und einer Entsprechung zwischen einem Identifikator eines Netzwerkdienstes, NS, und einem VNF-Instanzidentifikator zuordnet.

4. Verfahren nach einem der Ansprüche 1 bis 3, wobei die Abrechnungsinformationen von dem VIM Ressourcennutzungsinformationen der VM umfassen.

5. Abrechnungsverfahren, wobei das Verfahren auf Abrechnung basierend auf Netzwerkfunktionsvirtualisierungs-, NFV-, Architektur angewendet wird und die folgenden Schritte umfasst:
Senden (S303) einer Quote zu einem Netzwerkfunktionsvirtualisierungsorchestrierer, NFVO, durch ein Abrechnungssystem;
Empfangen von Abrechnungsinformationen von dem NFVO durch das Abrechnungssystem, wobei die Abrechnungsinformationen Nutzungsinformationen der Quote tragen und die Abrechnungsinformationen Abrechnungsinformationen von einem virtuellen Netzwerkfunktionsmanager, VNFM, und Abrechnungsinformationen von einem virtualisierten Infrastrukturmanager, VIM, umfassen; und
Durchführen (S308) von Abrechnung basierend auf den empfangenen Abrechnungsinformationen durch das Abrechnungssystem, wobei das Abrechnungssystem, nachdem das Abrechnungssystem die Abrechnungsinformationen von dem VNFM und die Abrechnungsinformationen von dem VIM empfangen hat, die Abrechnungsinformationen von dem VNFM und die Abrechnungsinformationen von dem VIM zuordnet, und das Durchführen von Abrechnung basierend auf den empfangenen Abrechnungsinformationen durch das Abrechnungssystem ist:
Durchführen von Abrechnung basierend auf den zugeordneten Abrechnungsinformationen durch das Abrechnungssystem.

6. Verfahren nach Anspruch 5, wobei das Abrechnungssystem die Abrechnungsinformationen von dem VNFM und die Abrechnungsinformationen von dem VIM basierend auf einer Entsprechung zwischen einem VNF-Instanzidentifikator und einem VM-Identifikator zuordnet.

7. Verfahren nach Anspruch 5 oder 6, wobei die Abrechnungsinformationen von dem VNFM des Weiteren einen VNF-Instanzidentifikator umfassen, und das Abrechnungssystem eine VNF-Instanz in den Abrechnungsinformationen von dem VNFM mit einem entsprechenden NS basierend auf dem VNF-Instanzidentifikator und einer Entsprechung zwischen einem NS-Identifikator und einem VNF-Instanzidentifikator zuordnet.

8. Abrechnungsvorrichtung (800), wobei die Vorrichtung auf Abrechnung basierend auf Netzwerkfunktionsvirtualisierungs-, NFV-, Architektur angewendet wird und umfasst:
ein Empfangsmodul (802), ein Verarbeitungsmodul (804) und ein Sendemodul (806), wobei
das Empfangsmodul konfiguriert ist, um eine Quote von einem Abrechnungssystem zu empfangen;
das Verarbeitungsmodul konfiguriert ist, um, wenn ein Triggerereignis stattfindet, Abrechnungsinformationen von einem virtuellen Netzwerkfunktionsmanager, VNFM, und Abrechnungsinformationen von einem virtualisierten Infrastrukturmanager, VIM, zu erhalten, wobei das Triggerereignis ein internes Triggerereignis oder ein externes Triggerereignis umfasst, wobei das Stattfinden des internen Triggerereignisses aktiv durch das Verarbeitungsmodul detektiert wird, das Stattfinden des externen Triggerereignisses aktiv durch den VNFM oder den VIM an das Verarbeitungsmodul berichtet wird, und die Abrechnungsinformationen von dem VNFM Nutzungsinformationen der Quote umfassen; und
das Sendemodul konfiguriert ist, um die Abrechnungsinformationen von dem VNFM und die Abrechnungsinformationen von dem VIM an das Abrechnungssystem zu senden, wobei, bevor das Sendemodul die Abrechnungsinformationen von dem VNFM und die Abrechnungsinformationen von dem VIM an das Abrechnungssystem sendet, das Verarbeitungsmodul des Weiteren konfiguriert ist, um die Abrechnungsinformationen von dem VNFM und die Abrechnungsinformationen von dem VIM zuzuordnen, und wobei das Senden der Abrechnungsinformationen von dem VNFM und der Abrechnungsinformationen von dem VIM durch das Sendemodul an das Abrechnungssystem ist: Senden der zugeordneten Abrechnungsinformationen an das Abrechnungssystem durch das Sendemodul.

9. Vorrichtung nach Anspruch 8, wobei das Verarbeitungsmodul die Abrechnungsinformationen von dem VNFM und die Abrechnungsinformationen von dem VIM basierend auf einer Entsprechung zwischen einem Instanzidentifikator einer virtuellen Netzwerkfunktion, VNF, und einem Identifikator einer virtuellen Maschine, VM, zuordnet.

10. Verfahren nach Anspruch 8 oder 9, wobei die Abrechnungsinformationen von dem VNFM des Weiteren einen VNF-Instanzidentifikator umfassen, und das Verarbeitungsmodul eine VNF-Instanz in den Abrechnungsinformationen von dem VNFM einem entsprechenden NS basierend auf dem VNF-Instanzidentifikator und einer Entsprechung zwischen einem Identifikator eines Netzwerkdienstes, NS, und einem VNF-Instanzidentifikator zuordnet.

11. Abrechnungsvorrichtung (900), wobei die Vorrichtung auf Abrechnung basierend auf Netzwerkfunktionsvirtualisierungs-, NFV-, Architektur angewendet wird und umfasst:
ein Sendemodul (902), ein Empfangsmodul (904) und ein Verarbeitungsmodul (906), wobei
das Sendemodul konfiguriert ist, um eine Quote zu einem Netzwerkfunktionsvirtualisierungsorchestrierer, NFVO, zu senden;
das Empfangsmodul konfiguriert ist, um Abrechnungsinformationen von dem NFVO zu empfangen, wobei die Abrechnungsinformationen Nutzungsinformationen der Quote tragen und die Abrechnungsinformationen Abrechnungsinformationen von einem virtuellen Netzwerkfunktionsmanager, VNFM, und Abrechnungsinformationen von einem virtualisierten Infrastrukturmanager, VIM, umfassen; und
das Verarbeitungsmodul konfiguriert ist, um Abrechnung basierend auf den empfangenen Abrechnungsinformationen durchzuführen, wobei das Verarbeitungsmodul, nachdem das Empfangsmodul die Abrechnungsinformationen von dem VNFM und die Abrechnungsinformationen von dem VIM empfangen hat, des Weiteren konfiguriert ist, um die Abrechnungsinformationen von dem VNFM und die Abrechnungsinformationen von dem VIM zuzuordnen, und das Durchführen von Abrechnung basierend auf den empfangenen Abrechnungsinformationen durch das Verarbeitungsmodul ist:
Durchführen von Abrechnung basierend auf den zugeordneten Abrechnungsinformationen durch das Verarbeitungsmodul.

12. Vorrichtung nach Anspruch 11, wobei das Verarbeitungsmodul die Abrechnungsinformationen von dem VNFM und die Abrechnungsinformationen von dem VIM basierend auf einer Entsprechung zwischen einem Instanzidentifikator einer virtuellen Netzwerkfunktion, VNF, und einem Identifikator einer virtuellen Maschine, VM, zuordnet.

## Revendications

1. Procédé de taxation, dans lequel le procédé est appliqué à une taxation basée sur une architecture de virtualisation de fonctions réseau, NFV, et comprend les étapes suivantes :
recevoir (S304), par un orchestrateur de virtualisation de fonctions réseau, NFVO, un quota à partir d'un système de taxation ;
lorsqu'un événement déclencheur se produit, obtenir (S305), par le NFVO, des informations de taxation à partir d'un gestionnaire de fonction réseau virtuelle, VNFM, et des informations de taxation à partir d'un gestionnaire d'infrastructure virtualisée, VIM, dans lequel l'événement déclencheur comprend un événement déclencheur interne ou un événement déclencheur externe, l'occurrence de l'événement déclencheur interne est détectée activement par le NFVO, l'occurrence de l'événement déclencheur externe est signalée activement par le VNFM ou le VIM au NFVO, et les informations de taxation provenant du VNFM comprennent des informations d'utilisation du quota ; et
envoyer (S306), par le NFVO, les informations de taxation provenant du VNFM et les informations de taxation provenant du VIM au système de taxation, dans lequel avant l'envoi, par le NFVO, des informations de taxation provenant du VNFM et des informations de taxation provenant du VIM au système de taxation, le NFVO associe les informations de taxation provenant du VNFM et les informations de taxation provenant du VIM, et l'envoi, par le NFVO, des informations de taxation provenant du VNFM et des informations de taxation provenant du VIM au système de taxation consiste à : envoyer, par le NFVO, les informations de taxation associées au système de taxation.

2. Procédé selon la revendication 1, dans lequel le NFVO associe les informations de taxation provenant du VNFM et les informations de taxation provenant du VIM sur la base d'une correspondance entre un identifiant d'instance de fonction réseau virtuelle, VNF, et un identifiant de machine virtuelle, VM

3. Procédé selon la revendication 1 ou 2, dans lequel les informations de taxation provenant du VNFM comprennent en outre un identifiant d'instance de VNF, et le NFVO associe une instance de VNF dans les informations de taxation provenant du VNFM à un NS correspondant sur la base de l'identifiant d'instance de VNF et d'une correspondance entre un identifiant de service de réseau, NS, et un identifiant d'instance de VNF

4. Procédé selon l'une quelconque des revendications 1 à 3, dans lequel les informations de taxation provenant du VIM comprennent des informations d'utilisation de ressources de la VM

5. Procédé de taxation, dans lequel le procédé est appliqué à une taxation basée sur une architecture de virtualisation de fonctions réseau, NFV, et comprend les étapes suivantes :
envoyer (S303), par un système de taxation, un quota à un orchestrateur de virtualisation de fonctions réseau, NFVO ;
recevoir, par le système de taxation, des informations de taxation à partir du NFVO, dans lequel les informations de taxation contiennent des informations d'utilisation du quota, et les informations de taxation comprennent des informations de taxation provenant d'un gestionnaire de fonctions réseau virtuelles, VNFM, et des informations de taxation provenant d'un gestionnaire d'infrastructure virtualisée, VIM; et
effectuer (S308), par le système de taxation, une taxation sur la base des informations de taxation reçues, dans lequel, une fois que le système de taxation a reçu les informations de taxation provenant du VNFM et les informations de taxation provenant du VIM, le système de taxation associe les informations de taxation provenant du VNFM et les informations de taxation provenant du VIM, et l'exécution, par le système de taxation, de la taxation sur la base des informations de taxation reçues consiste à :
effectuer, par le système de taxation, une taxation sur la base des informations de taxation associées.

6. Procédé selon la revendication 5, dans lequel le système de taxation associe les informations de taxation provenant du VNFM et les informations de taxation provenant du VIM sur la base d'une correspondance entre un identifiant d'instance de VNF et un identifiant de VM

7. Procédé selon la revendication 5 ou 6, dans lequel les informations de taxation provenant du VNFM comprennent en outre un identifiant d'instance de VNF, et le système de taxation associe une instance de VNF dans les informations de taxation provenant du VNFM à un NS correspondant sur la base de l'identifiant d'instance de VNF et d'une correspondance entre un identifiant de NS et un identifiant d'instance de VNF

8. Appareil de taxation (800), l'appareil étant appliqué à une taxation basée sur une architecture de virtualisation de fonctions réseau, NFV, et comprenant : un module de réception (802), un module de traitement (804), et un module d'envoi (806), dans lequel
le module de réception est configuré pour recevoir un quota à partir d'un système de taxation ;
le module de traitement est configuré pour : lorsqu'un événement déclencheur se produit, obtenir des informations de taxation à partir d'un gestionnaire de fonctions réseau virtuelles, VNFM, et des informations de taxation à partir d'un gestionnaire d'infrastructure virtualisée, VIM, dans lequel l'événement déclencheur comprend un événement déclencheur interne ou un événement déclencheur externe, l'occurrence de l'événement déclencheur interne est détectée activement par le module de traitement, l'occurrence de l'événement déclencheur externe est signalée activement par le VNFM ou le VIM au module de traitement, et les informations de taxation provenant du VNFM comprennent des informations d'utilisation du quota ; et
le module d'envoi est configuré pour envoyer les informations de taxation provenant du VNFM et les informations de taxation provenant du VIM au système de taxation, dans lequel avant que le module d'envoi n'envoie les informations de taxation provenant du VNFM et les informations de taxation provenant du VIM au système de taxation, le module de traitement est en outre configuré pour associer les informations de taxation provenant du VNFM et les informations de taxation provenant du VIM, et l'envoi, par le module d'envoi, des informations de taxation provenant du VNFM et des informations de taxation provenant du VIM au système de taxation consiste à : envoyer, par le module d'envoi, des informations de taxation associées au système de taxation.

9. Appareil selon la revendication 8, dans lequel le module de traitement associe les informations de taxation provenant du VNFM et les informations de taxation provenant du VIM sur la base d'une correspondance entre un identifiant d'instance de fonction réseau virtuelle, VNF, et un identifiant de machine virtuelle, VM

10. Appareil selon la revendication 8 ou 9, dans lequel les informations de taxation provenant du VNFM comprennent en outre un identifiant d'instance de VNF, et le module de traitement associe une instance de VNF dans les informations de taxation provenant du VNFM à un NS correspondant sur la base de l'identifiant d'instance de VNF et d'une correspondance entre un identifiant de service de réseau, NS, et un identifiant d'instance de VNF

11. Appareil de taxation (900), l'appareil étant appliqué à une taxation basée sur une architecture de virtualisation de fonctions réseau, NFV, et comprenant : un module d'envoi (902), un module de réception (904), et un module de traitement (906), dans lequel
le module d'envoi est configuré pour envoyer un quota à un orchestrateur de virtualisation de fonctions réseau, NFVO ;
le module de réception est configuré pour recevoir des informations de taxation à partir du NFVO, dans lequel les informations de taxation contiennent des informations d'utilisation du quota, et les informations de taxation comprennent des informations de taxation provenant d'un gestionnaire de fonctions réseau virtuelles, VNFM, et des informations de taxation provenant d'un gestionnaire d'infrastructure virtualisée, VIM ; et
le module de traitement est configuré pour effectuer une taxation basée sur les informations de taxation reçues, dans lequel une fois que le module de réception a reçu les informations de taxation à partir du VNFM et les informations de taxation à partir du VIM, le module de traitement est en outre configuré pour associer les informations de taxation provenant du VNFM et les informations de taxation provenant du VIM, et l'exécution, par le module de traitement, de la taxation sur la base des informations de taxation reçues consiste à :
effectuer, par le module de traitement, une taxation sur la base des informations de taxation associées.

12. Appareil selon la revendication 11, dans lequel le module de traitement associe les informations de taxation provenant du VNFM et les informations de taxation provenant du VIM sur la base d'une correspondance entre un identifiant d'instance de fonction réseau virtuelle, VNF, et un identifiant de machine virtuelle, VM
